# FASCICULE DE BREVET EUROPEEN

(11) **EP 3 243 670 B1**
(45) Date de publication et mention de la délivrance du brevet: **03.11.2021**
(21) Numéro de dépôt: 17168858.3
(22) Date de dépôt: 28.04.2017
(51) Int. Cl.: B60B 25/00, B60B 25/22

(54) **ROUE D'AERONEF**
RAD EINES LUFTFAHRZEUGS
AIRCRAFT WHEEL

(30) Priorité: 11.05.2016 FR 1654207
(43) Date de publication de la demande: 15.11.2017
(73) Titulaire: Safran Landing Systems, 78140 Vélizy-Villacoublay (FR)
(72) Inventeur: DARSY, Jérôme, 92160 Antony (FR); DELAYRE, Xavier, 78140 Velizy-Villacoublay (FR); COLONNA, Céline, 91640 Briis sous Forges (FR)
(74) Mandataire: Lavaud, Thomas

(56) Documents cités:
- EP-A1- 2 923 858
- DE-U1-202012 101 252
- JP-U- S5 548 543
- US-A- 4 640 330

## Description

### ARRIERE PLAN DE L'INVENTION

On connaît des roues d'aéronef comportant une jante et un pneumatique reçu sur la jante, la jante comprenant deux parties de jante assemblées entre elles au moyen de boulons répartis régulièrement. Une roue de ce type est connue de EP 2923858A1.

Chaque partie de jante, fabriquée en un alliage d'aluminium, comporte classiquement une surface d'appui qui s'étend selon un plan perpendiculaire à un axe de rotation de la roue. Lorsque la jante est assemblée, les surfaces d'appui des parties de jante sont positionnées l'une contre l'autre. Chaque partie de jante exerce alors une compression importante sur la surface d'appui de l'autre partie de jante. Un coefficient de friction élevé entre les surfaces d'appui résulte de cette compression importante.

Or, lorsque la roue est en rotation, les différentes zones périphériques du pneumatique et de la jante sont alternativement mises sous charge puis au repos. Les parties de jante subissent alors, l'une par rapport à l'autre, des micromouvements radiaux et périphériques assimilables à un mouvement relatif de reptation.

Le coefficient de friction entre les surfaces d'appui des parties de jante est tel que les micromouvements radiaux et périphériques provoquent un arrachement progressif d'un revêtement de protection des surfaces d'appui. Les surfaces d'appui brutes en aluminium subissent alors un phénomène de fretting sous tension qui détériore les surfaces d'appui brutes et provoque la formation de criques.

Ainsi, lors d'un changement de pneumatique, il est fréquemment nécessaire soit de reprendre les surfaces d'appui brutes par usinage et de réappliquer le revêtement de protection, soit, lorsqu'un départ de fissure est constaté, de remplacer la partie de jante en question qui n'est alors plus réutilisable. Les coûts de maintenance associés à ces opérations sont relativement élevés.

L'invention a pour objet de réduire les coûts de maintenance associés à une roue d'aéronef.

### RESUME DE L'INVENTION

En vue de la réalisation de ce but, on propose une roue d'aéronef comportant une jante comprenant deux parties de jante assemblées entre elles, chaque partie de jante comportant une surface d'appui s'étendant selon un plan perpendiculaire à un axe de rotation de la roue d' aéronef, les surfaces d'appui des parties de jante étant positionnables l'une contre l'autre lorsque la jante est assemblée.

Selon l'invention, la roue d'aéronef comporte en outre une entretoise située entre les deux surfaces d'appui lorsque les parties de jante sont assemblées entre elles, l'entretoise s'étendant alors sur la totalité de chaque surface d'appui.

L'entretoise permet de limiter l'arrachement des revêtements des surfaces d'appui. Les coûts de maintenance résultant du contrôle, de la remise en peinture ou bien du remplacement d'une partie de jante ou des deux parties de jante sont donc réduits.

D'autres caractéristiques et avantages de l'invention ressortiront à la lecture de la description qui suit de modes de réalisation particuliers, non limitatifs de l'invention.

### BREVE DESCRIPTION DES DESSINS

Il sera fait référence aux dessins annexés parmi lesquels :

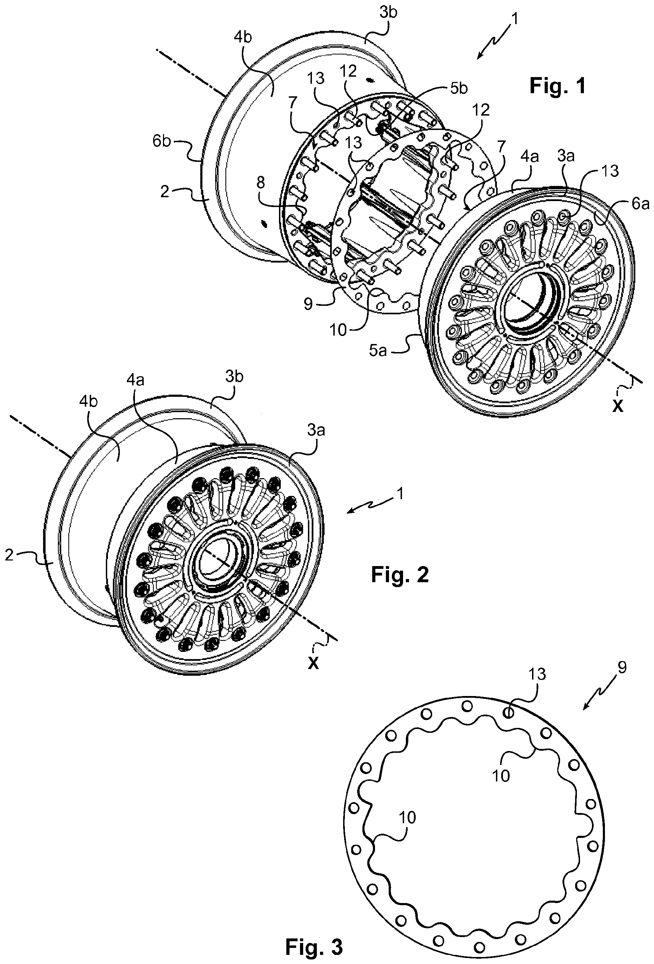

- la figure 1 est une vue en perspective d'une jante non assemblée d'une roue d'aéronef selon un premier mode de réalisation de l'invention ;
- la figure 2 est une vue en perspective de la jante assemblée ;
- la figure 3 représente une entretoise de la roue d'aéronef selon le premier mode de réalisation de l'invention.

### DESCRIPTION DETAILLEE DE L'INVENTION

En référence aux figures, la roue d'aéronef 1 selon un premier mode de réalisation de l'invention comporte une jante 2 destinée à recevoir un pneumatique (non visible). La jante 2, fabriquée en un alliage d'aluminium, comprend une première partie de jante 3a et une deuxième partie de jante 3b assemblées entre elles.

La première partie de jante 3a comprend une portion annulaire 4a qui s'étend entre une extrémité interne 5a et une extrémité externe 6a de la première partie de jante 3a. Une face externe de la jante 2 s'étend au niveau de l'extrémité externe 6a de la première partie de jante 3a.

La deuxième partie de jante 3b comprend une portion annulaire 4b, présentant une longueur supérieure à une longueur de la portion annulaire 4a de la première partie de jante 3a, qui s'étend entre une extrémité interne 5b et une extrémité externe 6b de la deuxième partie de jante 3b. L'extrémité externe 6b de la deuxième partie de jante 3b définit une ouverture au travers de laquelle est susceptible de s'étendre une pile de disques de friction d'un frein de la roue d'aéronef 1.

La première partie de jante 3a et la deuxième partie de jante 3b comportent de plus chacune une surface d'appui 7.

La surface d'appui 7 de la première partie de jante 3a est située au niveau de l'extrémité interne 5a de la première partie de jante 3a et s'étend selon un plan perpendiculaire à un axe de rotation X de la roue d'aéronef 1. La surface d'appui 7 de la première partie de jante 3a forme un épaulement, qui s'étend depuis la portion annulaire 4a de la première partie de jante 3a vers l'axe de rotation X de la roue d'aéronef 1, et qui présente des ondulations orientées vers l'axe de rotation X de la roue d'aéronef 1.

De même, la surface d'appui 7 de la deuxième partie de jante 3b est située au niveau de l'extrémité interne 5b de la deuxième partie de jante 3b et s'étend selon un plan perpendiculaire à un axe de rotation X de la roue d'aéronef 1. La surface d'appui 7 de la deuxième partie de jante 3b forme un épaulement, qui s'étend depuis la portion annulaire 4b de la deuxième partie de jante 3b vers l'axe de rotation X de la roue d'aéronef 1, et qui présente des ondulations 8 orientées vers l'axe de rotation X de la roue d'aéronef 1.

Chaque surface d'appui 7 est traitée, au moment de la fabrication de la première partie de jante 3a et de la deuxième partie de jante 3b, par une anodisation de type OAS (pour « Oxydation Anodique Sulfurique »). Chaque surface d'appui 7 est en outre revêtue d'une couche de peinture primaire et d'une couche de peinture de finition.

La roue d'aéronef 1 comporte de plus une entretoise 9 qui se présente sous la forme d'une couronne plate et qui comporte des ondulations 10 orientées vers un centre de l'entretoise 9.

L'entretoise 9 est positionnée entre les deux surfaces d'appui 7 lorsque la première partie de jante 3a et la deuxième partie de jante 3b (et l'entretoise 9) sont assemblées entre elles. L'entretoise 9 s'étend alors sur la totalité de chaque surface d'appui 7. En particulier, les ondulations 10 de l'entretoise 9 correspondent avec les ondulations 8 de la surface d'appui 7 de la première partie de jante 3a et avec les ondulations de la surface d'appui 7 de la deuxième partie de jante 3b.

La première partie de jante 3a, la deuxième partie de jante 3b et l'entretoise 9 sont assemblées entre elles et maintenues serrées au moyen de boulons d'assemblage comprenant chacun un écrou, une rondelle et une vis d'assemblage 12. La première partie de jante 3a, la deuxième partie de jante 3b et l'entretoise 9 comportent à cet effet des orifices de fixation 13.

Les vis d'assemblage 12 s'étendent au travers des orifices de fixation 13 de la première partie de jante 3a, de la deuxième partie de jante 3b et de l'entretoise 9. L'entretoise 9 est ainsi maintenue en position angulaire par les vis d'assemblage 12.

L'entretoise 9 est ici fabriquée en acier inoxydable de type X5CNi18―10 (304L).

L'épaisseur de l'entretoise 9 est ici comprise entre 0,05mm et 0,25mm.

Chacune des faces de l'entretoise 9 présente une finition de surface brillante semblable à la finition de tôles formant des écrans thermiques de la roue d'aéronef 1 et positionnées à l'interface de la première partie de jante 3a et de la deuxième partie de jante 3b.

L'entretoise 9 présente une forte raideur en compression, typiquement supérieure ou égale à 193000 MPa. Les faces de l'entretoise 9 présentent un faible coefficient de frottement, typiquement compris entre 0,12 et 0,18 (et avantageusement proche de 0,15), et une rugosité arithmétique moyenne Ra inférieure à 0,8.

La faible épaisseur de l'entretoise 9 permet d'installer l'entretoise 9 sur une roue d'aéronef 1 sans qu'il ne soit nécessaire de modifier les interfaces de la roue d'aéronef 1 (jante, vis d'assemblage, etc.).

L'entretoise 9 peut donc non seulement être montée sur une roue d'aéronef 1 dont la jante 2 vient d'être fabriquée sans qu'il ne soit nécessaire de modifier ladite jante 2, mais peut aussi être montée sur une roue d'aéronef 1 déjà mise en service sur un aéronef et qui présente des signes de fretting.

La faible rugosité arithmétique moyenne Ra de l'entretoise facilite le glissement entre les faces de l'entretoise 9 et les surfaces d'appui 7, et permet d'éviter un arrachement de la peinture des surfaces dû aux micromouvements radiaux et périphériques évoqués plus tôt.

On protège ainsi les surfaces d'appui 7 en facilitant les micromouvements radiaux et périphériques, plutôt qu'en tentant de les empêcher en serrant d'avantage entre elles la première partie de jante 3a et la deuxième partie de jante 3b.

On décrit maintenant une roue d'aéronef selon un deuxième mode de réalisation de l'invention. Dans le deuxième mode de réalisation de l'invention, on cherche cette fois à supprimer le glissement et les micromouvements radiaux et périphériques pour éviter le phénomène de fretting sous tension qui détériore les surfaces d'appui de la première partie de jante et de la deuxième partie de jante. On augmente pour cela le coefficient de frottement entre l'entretoise et les surfaces d'appui de la première partie de jante et de la deuxième partie de jante.

Chaque face de l'entretoise est ici revêtue de poudre de diamant, qui confère aux faces de l'entretoise un coefficient de frottement important (supérieur à 0,19).

Chaque surface d'appui est à nouveau traitée, au moment de la fabrication de la première partie de jante et de la deuxième partie de jante, par une anodisation de type OAS (pour « Oxydation Anodique Sulfurique »).

Chaque surface d'appui est par ailleurs protégée par un revêtement permettant d'éviter la formation d'un couple galvanique. Le revêtement peut par exemple comporter une pâte à base de lubrifiants solides et comprenant une huile minérale (on utilise par exemple le produit Molykote® G-Rapid Plus) .

Bien entendu, l'invention n'est pas limitée aux modes de réalisation décrit mais englobe toute variante entrant dans le champ de l'invention telle que définie par les revendications.

La forme de l'entretoise peut bien sûr différer de la forme présentée ici.

L'entretoise peut par exemple comporter plusieurs parties formant chacune un secteur de l'entretoise.

L'entretoise peut aussi être fabriquée en un matériau différent. Un autre acier inoxydable peut ainsi être utilisé (par exemple, un acier inoxydable du type X8CrNi18―08) .

Dans le premier mode de réalisation selon l'invention, l'entretoise peut notamment se présenter sous la forme d'un autocollant très peu compressible et dont une surface libre aurait un très faible coefficient de friction.

L'entretoise peut aussi être fabriquée en un matériau organique ou synthétique qui possède une raideur et un état de surface adaptés (par exemple, un ruban comprenant un support en tissu de verre imprégné de PTFE et un adhésif en silicone peut être utilisé).

Dans le deuxième mode de réalisation, chaque face de l'entretoise peut être revêtue d'un autre revêtement, par exemple de poudre de céramique.

Par ailleurs, les surfaces d'appui ne sont pas nécessairement revêtues d'une couche de peinture primaire et d'une couche de peinture de finition. Les surfaces d'appui peuvent notamment ne pas être revêtues, ou bien être revêtues d'une couche de peinture primaire uniquement.

## Revendications

1. Roue d'aéronef comportant une jante (2) comprenant deux parties de jante (3a, 3b) assemblées entre elles, chaque partie de jante (3a, 3b) comportant une surface d'appui (7) s'étendant selon un plan perpendiculaire à un axe de rotation (X) de la roue d'aéronef, les surfaces d'appui des parties de jante étant positionnables l'une contre l'autre lorsque la jante est assemblée, **caractérisée en ce que** la roue d'aéronef comporte en outre une entretoise (9) située entre les deux surfaces d'appui (7) lorsque les parties de jante (3a, 3b) sont assemblées entre elles, l'entretoise s'étendant alors sur la totalité de chaque surface d'appui.

2. Roue d'aéronef selon la revendication 1, dans laquelle l'entretoise (9) se présente sous la forme d'une couronne plate.

3. Roue d'aéronef selon la revendication 2, dans laquelle l'entretoise (9) comporte des ondulations (10) orientées vers un centre de l'entretoise, lesdites ondulations de l'entretoise s'étendant sur des ondulations (8) correspondantes formées sur une surface d'appui d'une partie de jante lorsque les parties de jante sont assemblées entre elles.

4. Roue d'aéronef selon la revendication 1, dans laquelle l'entretoise présente une épaisseur comprise entre 0,05mm et 0,25mm.

5. Roue d'aéronef selon la revendication 1, dans laquelle l'entretoise est maintenue en position angulaire par une vis d'assemblage (12) destinée à assembler entre elles les parties de jante, la vis d'assemblage s'étendant au travers de l'entretoise.

6. Roue d'aéronef selon la revendication 1, dans laquelle l'entretoise comporte plusieurs parties formant chacune un secteur de l'entretoise.

7. Roue d'aéronef selon la revendication 1, dans laquelle l'entretoise (9) présente une raideur en compression supérieure ou égale à 193000 MPa.

8. Roue d'aéronef selon la revendication 1, dans laquelle des faces de l'entretoise (9) présentent un coefficient de frottement compris entre 0,12 et 0,18.

9. Roue d'aéronef selon la revendication 1, dans laquelle des faces de l'entretoise présentent un coefficient de frottement supérieur à 0,19.

10. Roue d'aéronef selon la revendication 1, dans laquelle des faces de l'entretoise (9) présentent une rugosité arithmétique moyenne Ra inférieure à 0,8.

11. Roue d'aéronef selon la revendication 1, dans laquelle l'entretoise (9) est fabriquée en un acier inoxydable.

12. Roue d'aéronef selon la revendication 11, dans laquelle l'acier inoxydable est du type X5CrNi18―10 (304L) ou du type X8CrNi18―08.

13. Roue d'aéronef selon la revendication 1, dans laquelle l'entretoise (9) est fabriquée en un matériau organique ou synthétique.

14. Roue d'aéronef selon la revendication 1, dans laquelle l'entretoise (9) se présente sous la forme d'un autocollant.

15. Roue d'aéronef selon la revendication 1, dans laquelle des faces de l'entretoise sont revêtues de poudre de diamant ou de poudre de céramique.

16. Roue d'aéronef selon la revendication 1, dans laquelle les surfaces d'appui (7) sont traitées par une anodisation de type OAS.

17. Roue d'aéronef selon la revendication 1, dans laquelle les surfaces d'appui (7) sont revêtues d'une couche de peinture primaire et d'une couche de peinture de finition.

18. Roue d'aéronef selon la revendication 1, dans laquelle les surfaces d'appui (7) sont protégées par un revêtement permettant d'éviter la formation d'un couple galvanique et comprenant un lubrifiant.

## Patentansprüche

1. Luftfahrzeugrad, umfassend eine Felge (2), die zwei zusammengefügte Felgenteile (3a, 3b) umfasst, wobei jeder Felgenteil (3a, 3b) eine Anlagefläche (7) umfasst, die sich in einer Ebene senkrecht zur Rotationsachse (X) des Luftfahrzeugrades erstreckt, wobei die Anlageflächen der Felgenteile aneinander positionierbar sind, wenn die Felge zusammengefügt ist, **dadurch gekennzeichnet, dass** das Luftfahrzeugrad ferner einen Abstandshalter (9) umfasst, der sich zwischen den beiden Anlageflächen (7) befindet, wenn die Felgenteile (3a, 3b) zusammengefügt sind, wobei sich der Abstandshalter dann vollkommen über jede Anlagefläche erstreckt.

2. Luftfahrzeugrad nach Anspruch 1, bei dem der Abstandshalter (9) die Form eines flachen Kranzes hat.

3. Luftfahrzeugrad nach Anspruch 2, bei dem der Abstandshalter (9) Wellen (10) umfasst, die in Richtung eines Zentrums des Abstandshalters gerichtet sind, wobei sich die genannten Wellen des Abstandshalters auf entsprechenden Wellen (8), die auf einer Anlagefläche eines Felgenteils ausgebildet sind, erstrecken, wenn die Felgenteile zusammengefügt sind.

4. Luftfahrzeugrad nach Anspruch 1, bei dem der Abstandshalter eine Dicke zwischen 0,05 mm und 0,25 mm hat.

5. Luftfahrzeugrad nach Anspruch 1, bei dem der Abstandshalter durch eine Montageschraube (12), die dazu bestimmt ist, die Felgenteile zusammenzufügen, in einer Winkelposition gehalten wird, wobei sich die Montageschraube durch den Abstandshalter erstreckt.

6. Luftfahrzeugrad nach Anspruch 1, bei dem der Abstandshalter mehrere Teile umfasst, die jeweils einen Sektor des Abstandshalters bilden.

7. Luftfahrzeugrad nach Anspruch 1, bei dem der Abstandshalter (9) eine Drucksteifigkeit von größer oder gleich 193000 MPa aufweist.

8. Luftfahrzeugrad nach Anspruch 1, bei dem die Flächen des Abstandshalters (9) einen Reibungskoeffizienten zwischen 0,12 und 0,18 aufweisen.

9. Luftfahrzeugrad nach Anspruch 1, bei dem die Flächen des Abstandshalters (9) einen Reibungskoeffizienten aufweisen, der größer als 0,19 ist.

10. Luftfahrzeugrad nach Anspruch 1, bei dem die Flächen des Abstandshalters (9) eine mittlere arithmetische Rauheit Ra aufweisen, die kleiner als 0,8 ist.

11. Luftfahrzeugrad nach Anspruch 1, bei dem der Abstandshalter (9) aus rostfreiem Stahl hergestellt ist.

12. Luftfahrzeugrad nach Anspruch 11, bei dem der rostfreie Stahl vom Typ X5CrNi18-10 (304L) oder vom Typ X8CrNi18-08 ist.

13. Luftfahrzeugrad nach Anspruch 1, bei dem der Abstandshalter (9) aus einem organischen oder synthetischen Material hergestellt ist.

14. Luftfahrzeugrad nach Anspruch 1, bei dem der Abstandshalter (9) in Form eines Aufklebers vorliegt.

15. Luftfahrzeugrad nach Anspruch 1, bei dem die Flächen des Abstandshalters mit Diamantpulver oder Keramikpulver überzogen sind.

16. Luftfahrzeugrad nach Anspruch 1, bei dem die Anlageflächen (7) durch Anodisierung vom Typ OAS behandelt sind.

17. Luftfahrzeugrad nach Anspruch 1, bei dem die Auflageflächen (7) mit einer Grundierungsfarbschicht und mit einer Deckfarbschicht überzogen sind.

18. Luftfahrzeugrad nach Anspruch 1, bei dem die Anlageflächen (7) durch einen Überzug geschützt sind, durch den die Bildung einer galvanischen Kopplung vermieden werden kann und der ein Schmiermittel enthält.

## Claims

1. An aircraft wheel including a rim (2) comprising two assembled-together rim halves (3a, 3b), each rim half (3a, 3b) having a bearing surface (7) extending in a plane perpendicular to an axis of rotation (X) of the aircraft wheel, the bearing surfaces of the rim halves being positionable one against the other when the rim is assembled, the aircraft wheel being **characterized in that** it further includes a spacer (9) situated between the two bearing surfaces (7) when the rim halves (3a, 3b) are assembled together, the spacer extending over all of each bearing surface.

2. An aircraft wheel according to claim 1, wherein the spacer (9) is in the form of a flat ring.

3. An aircraft wheel according to claim 2, wherein the spacer (9) includes undulations (10) oriented towards the center of the spacer, said spacer undulations extending over corresponding undulations (8) formed on a bearing surface of a rim half when the rim halves are assembled together.

4. An aircraft wheel according to claim 1, wherein the spacer presents thickness lying in the range 0.05 mm to 0.25 mm.

5. An aircraft wheel according to claim 1, wherein the spacer is held in angular position by an assembly bolt (12) for assembling together the rim halves, the assembly bolt extending through the spacer.

6. An aircraft wheel according to claim 1, wherein the spacer comprises a plurality of portions, each forming a sector of the spacer.

7. An aircraft wheel according to claim 1, wherein the spacer (9) presents stiffness in compression that is greater than or equal to 193,000 MPa.

8. An aircraft wheel according to claim 1, wherein faces of the spacer (9) present a coefficient of friction lying in the range 0.12 to 0.18.

9. An aircraft wheel according to claim 1, wherein faces of the spacer present a coefficient of friction that is greater than 0.19.

10. An aircraft wheel according to claim 1, wherein faces of the spacer (6) present an arithmetic average roughness Ra that is less than 0.8.

11. An aircraft wheel according to claim 1, wherein the spacer (9) is made of stainless steel.

12. An aircraft wheel according to claim 11, wherein the stainless steel is of the X5CrNi18-10 (304L) type or of the X8CrNi18―08 type.

13. An aircraft wheel according to claim 1, wherein the spacer (9) is made of an organic or synthetic material.

14. An aircraft wheel according to claim 1, wherein the spacer (9) is in the form of a sticker.

15. An aircraft wheel according to claim 1, wherein faces of the spacer are coated in diamond powder or in ceramic powder.

16. An aircraft wheel according to claim 1, wherein the bearing surfaces (7) are treated with SAA type anodization.

17. An aircraft wheel according to claim 1, wherein the bearing surfaces (7) are coated in a layer of primer paint and a layer of finish paint.

18. An aircraft wheel according to claim 1, wherein the bearing surfaces (7) are protected by a coating for avoiding the formation of a galvanic couple, and including a lubricant.
